Europäisches Patentamt

European Patent Office

Office européen des brevets

(19)

(11) **EP 1 677 462 A1**

(12) **EUROPEAN PATENT APPLICATION**

(43) Date of publication:
**05.07.2006 Bulletin 2006/27**

(51) Int Cl.:
*H04L 12/56* (2006.01)

(21) Application number: **04030863.7**

(22) Date of filing: **28.12.2004**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **Eidgenössische Technische
Hochschule Zürich
8092 Zürich (CH)**

(72) Inventors:
• **Plattner, Bernhard
5000 Aarau (CH)**

• **May, Martin
8006 Zürich (CH)**
• **Lenders, Vincent
8053 Zürich (CH)**

(74) Representative: **Blum, Rudolf Emil et al
E. BLUM & CO.
Vorderberg 11
8044 Zürich (CH)**

(54) **Service discovery in ad hoc networks**

(57)    The invention provides a system that implements robust service discovery in dynamic networks. It defines a relevance field, for a given service type, over the nodes of the network, namely by attributing, to each node, a relevance value *phi*(*n*). The relevance field is defined such that it has local maxima, each of which corresponds to a node (j1, j2) offering the given service type.

A requesting node (n) trying to discover a provider for the given service type sends a service query for the service type along a path of nodes that have increasing relevance values until the service query reaches a node corresponding to a local maximum of the relevance field, i.e. one of the service providers. The service provider then replies to the requester.

Fig. 1

EP 1 677 462 A1

Description

Technical Field

The invention relates to a method for determining a service provider on a dynamic network as well as to a device for being incorporated into such a network.

Background Art

In dynamic networks, such as wireless mobile ad hoc networks (MANETs) and other networks with only very limited or no fixed infrastructure support, the participating nodes must usually provide the basic communication primitives, such as routing and service discovery, themselves. Since nodes in such networks tend to move, to join or to leave at any time, the corresponding mechanisms must be robust and adaptive.

In general, the network comprises a plurality of nodes, some of which offer a given service type, such as a gateway to the internet. A service discovery mechanism is required to allow any node on the network to discover the most suitable provider of a given service type.

Disclosure of the Invention

Hence, it is a general object of the invention to provide a method and device of the type mentioned above that implements robust service discovery in this type of networks. This object is achieved by the method and device of the independent claims.

Hence, according to the invention, a relevance field for a given first service type is defined over the nodes of the network, namely by attributing, to each node n of at least part of said nodes, a relevance value $\varphi(n)$. The relevance field is defined such that it has local maximum values, each of which corresponds to a node offering the given service type.

A requesting node trying to reach a provider for the given service type sends a service query for the service type along a path of nodes that have increasing relevance values until the service query reaches a node corresponding to a local maximum value. This allows to determine a node offering the given service type.

This approach is akin to simulating an attractive field over the network, where the peaks of the field are the service providers for the given service type and the "particles" moved by the field are the service queries moving towards said peaks or maxima.

As it is easily understood by the person skilled in the art, the values of the relevance field can by offset by a positive or negative offset value or multiplied by a positive or negative factor without changing the nature of the invention. Hence, the peaks corresponding to the nodes providing the services of the given type can also be local minima, i.e. the term "maximum" as used in the description and the claims can alternatively be replaced by "minimum" if the path followed by the service query is defined by following nodes that have decreasing relevance values.

The invention can e.g. be implemented by appropriate design and programming of the devices participating in the network.

A suitable device comprises an interface forming a node n for direct communication with other nodes of the network.

It further comprises a relevance determination means, such as a suitable program in the device's software, for calculating the relevance field for the given service type by attributing, to the node n, a relevance value $\varphi(n)$. The relevance field should be defined such that it has local maximum values, each of said local maximum values corresponding to a node offering the given service type.

Furthermore, the device should comprise a query generating means, e.g. implemented as another suitable piece of software, for sending a service query for the given service type from the node of the device along a path of the other nodes.

Finally, the device should comprise a query forwarding means, e.g. implemented as a suitable piece of message handling software, for forwarding an incoming service query to a neighboring node having a higher relevance value than the node of the device.

Using a plurality of such devices in a network allows the service query to follow a path of nodes having increasing relevance values until it reaches the node corresponding to a local maximum value.

Brief Description of the Drawings

The invention will be better understood and objects other than those set forth above will become apparent when consideration is given to the following detailed description thereof. Such description makes reference to the annexed drawings, wherein:

Fig. 1 is a schematic block diagram of a dynamic network with a plurality of nodes and

Fig. 2 shows some of the components of a node.

## Modes for Carrying Out the Invention

The network and its devices:

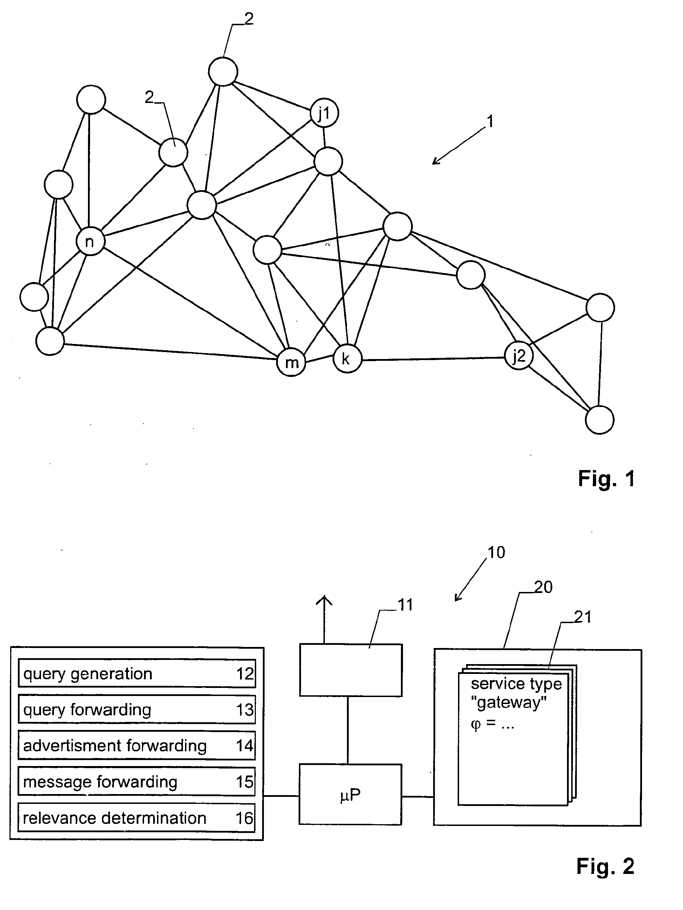

A dynamic network 1 having a plurality of nodes 2 is shown in Fig. 1. The network is preferably a wireless, mobile ad hoc network where the nodes 2 are connected by radio and at least some of the nodes are mobile.

Each node 2 is able to communicate directly with one or more other nodes, in the following called the node's "neighboring nodes". In addition, the nodes may implement message forwarding services, e.g. using conventional techniques, that allows one node to reach all other nodes in the network by routing a message through intermediate nodes.

It is assumed that all links between nodes are bi-directional.

The basic design of a device 10 forming a node 2 is shown in Fig. 2. The device comprises a radio interface 11 for communication in the network. It further comprises various software components for query generation 12, query forwarding 13, advertisement forwarding 14, general message forwarding 15 and relevance determination 16, the purpose of which is explained below. It also comprises a memory 20 for storing status information and other data relevant for the operation of the device 10. Memory 20 comprises a list 21 of service types that the device is aware of, with status information regarding each service type, as described below.

Relevance fields:

As mentioned above, the invention relates to the discovery of services in network 1. Such services are grouped into different service types, such as "internet gateways", "printing services", "TV-on-demand services", or others. Each service type may be offered by one or, usually, several nodes in the network. A node n looking for a provider of a given service type needs some way to determine the most suitable node providing the service.

In the following example, we assume that node n is looking for an internet gateway or a gateway to any other second network and nodes j1 and j2 are providing internet gateway services.

In the approach of the current invention, one or more scalar relevance fields $\varphi$ is or are defined over the network. Each relevance field describes the location and "strength" of the providers of a given service type. Relevance fields attributed to different service types are independent of each other. In the following, we therefore look at a single relevance field $\varphi$ for one given service type only.

The relevance field $\varphi$ has a defined relevance value at each node of the network, such as the relevance value $\varphi(n)$ at node n. Furthermore, the relevance field $\varphi$ is defined such that it has local maximum values or peaks, each of which corresponds to a node offering the given service type. In the present example, the relevance field attributed to internet gateways has local maxima at the locations of nodes j1 and j2.

Preferably, the relevance value $\varphi(n)$ at a given node n is defined as

$$\varphi(n) = \sum_{j=1}^{N} \varphi_j(n), \qquad\qquad (1)$$

wherein N is the number of nodes offering the given service type and $\varphi_j(n)$ is a "single-service relevance field". Each single-service relevance field $\varphi_j(n)$ has a maximum corresponding to a node j offering the given service type. In other words, the relevance field $\varphi$ is a linear superposition of the single-service relevance fields $\varphi_j$ of all individual service providers j for the given service type.

In most cases, it will make sense for the single-service relevance fields $\varphi_j(n)$ to drop monotonously with increasing distance dist(n, j) between nodes *n* and *j*, which expresses the fact that the service provider at node j will become less useful or more costly (in terms of network resources) the further away it is from a client node n.

The distance dist(n, j) can e.g. be defined as the minimum number of nodes that a message has to pass for propagating from node n to node j. Depending on the network or type of service, other definitions could be used as well, such as the time required for a message to propagate from node n to node *j*, or the minimum of the number of hops in a path from n to j scaled e.g. by the data rate available through that path.

Preferably, each single-service relevance field $\varphi_j(n)$ has the form

$$\varphi_j(n) \;=\; Q_j \;\cdot\; \varphi'_j(n), \qquad\qquad (2)$$

where $Q_j$ is a "strength" attributed to node j while $\varphi'_j(n)$ is the same function for all nodes j offering the given service type. This allows to express the "usefulness" of a given service provider, such as the data rate available at a given internet gateway. Hence, the strengths $Q_{j1}$ and $Q_{j2}$ attributed to two nodes $j1$ and $j2$ of different "usefulness" are different.

A suitable form of the single-service relevance fields $\varphi_j(n)$ is

$$\varphi_j(n) \;=\; \frac{Q_j}{\mathrm{dist}(n,\,j)^k} \;, \qquad\qquad (3)$$

where k is a constant > 0. This type of function inherently decays with increasing distance from node j (and can e.g. be defined to have a very large or "infinite" value at node j itself). The exponent k defines how quickly the field decays.

Preferably, k = 1 is used. In this case, equation (3) corresponds to the potential function of an electric field of a charge $Qj$ located at node j.

It must be noted that slight deviations from equation (3) are irrelevant. For example, for the implementation of flooding prevention mechanisms as described below, $\varphi_j(n)$ can be set to zero if $Q_j/\mathrm{dist}(n,\,j)^k$ falls below a given threshold value.

Service advertisements:

To implement service discovery based on this scheme, each node n in the network needs to know its relevance value $\varphi(n)$ for a given type of service. To spread this knowledge, each node j offering a given type of service sends repetitive "service advertisements" to its neighboring nodes. A service advertisement is a short message that may e.g. contain the following data:

- service_type: the service type offered by the node. This may e.g. be the string "gateway".
- capacity_of_service: an indicator of the "strength" of the service corresponding to the value $Q_j$ in equation (2). The strength is an indicator of the quality or capacity of the service provider. Its exact definition depends on the nature of the service.
- hop_count: a counter that is incremented each time the service advertisement is forwarded to a next node (see below).
- service_id: a unique id attributed to the service provider that originally generated the service advertisement.
- sequence_number: a unique number attributed to each service advertisement broadcast by the service providing node. This is used in "flooding prevention" as described below.
- expiry: the duration of the validity of the service advertisement, defining a time of expiry. At the time of expiry, the advertisement is considered to have expired and the data derived therefrom is deleted from the nodes of the network.

As mentioned, each node providing a service broadcasts such service advertisements at regular intervals to its neighbors. The intervals should be shorter than the time to expiry defined in the expiry field, thereby maintaining information about the service providing node within the network as long as the node is connected to the network.

Each node receiving a service advertisement looks up list 21 for the given service type and proceeds as follows:

1. If the node has already received a service advertisement with the same service_id:

1a. If the already received announcement has a newer sequence_number, the received service advertisement is dropped, because it is obsolete. Processing ends.

1b. If the already received announcement has an older sequence_number, the already received service advertisement is dropped and processing continues with step 2.

1c. Otherwise, the earlier and the present service advertisements were received over alternative paths. In that case, the hop_count fields of the two service advertisements are compared. If the hop_count field of the new advertisement is larger than or equal to the hop_count field of the previous advertisement, the new advertisement is dropped and processing ends. Otherwise, the received service advertisement is new and relevant and the old service advertisement is dropped, and processing continues with step 2.

2. The received service advertisement is stored in list 21, if necessary opening a new entry for the given service type. The relevance value $\varphi(n)$ stored in list 21 is increased by adding the term of equation (2) or (3), respectively. If the expression of equation (3) with k = 1 is used, $\varphi(n)$ is e.g. increased by the value capacity_of_service/hop_count.

3. The field hop_count of received service advertisement is increased and the advertisement forwarding procedure 14 is invoked for forwarding the service advertisement to all neighboring nodes.

Service queries:

A node n that wants to discover the best provider of a given service type invokes a query generation procedure 12 that generates a service query and sends it to the neighbor having the highest relevance value $\varphi$, e.g. as determined in a preceding exchange of relevance values as described below.

A service query can e.g. contain the following data:

- service_type: the requested service type. This may e.g. be the string "gateway".
- requester_address: a unique address that allows to reach the requester. Alternatively, information indicative of a return path to the requester can be added to the service query, while it is propagating along the path of nodes having increasing relevance as described below.
- time_to_live: a field initialized to a given value and decreased each time the service query is forwarded through a node (see below). The service request is discarded when time_to_live reaches zero.

The service query can further hold additional data, such as a payload specific for the given service type.

A node m receiving a service query checks if it provides the given type of service. If yes, it answers with a service reply (see below). If not, it invokes its query forwarding procedure 13, which decrements the time_to_live field of the received service query and, if the field is zero, drops the query. Otherwise, it determines which one of the neighboring nodes has the highest relevance value $\varphi$.

For this purpose, the protocol must define a dedicated message for exchanging relevance values between neighboring nodes. For example, node m can periodically broadcast its relevance values to its neighbors $m1$, $m2$, etc. Since all neighbors broadcast update messages, the network is able to build up the relevance field.

Once node m has determined the neighboring node k with the highest relevance value, it forwards the service query to said node k only.

In this way, the service query propagates along nodes having increasing relevance values along the steepest ascent of the relevance field, and it will sooner or later arrive at a local peak thereof, which corresponds to one of the service providers j1, j2.

Service replies:

When a service provider receives a service query for a service type that it provides, it generates a service reply. A service reply can e.g. contain the following data:

- service_type: the provided service type. This may e.g. be the string "gateway".
- service_address: a unique address that allows identifying and reaching the provider.
- service_description: additional information about the service.

The service reply can contain additional data, such as a payload specific to the given service type.

The service reply is sent back to the requesting node that generated the service query. Depending on the nature of network 1, this can be done in several ways:

1. If network 1 allows to reach nodes by means of unique node addresses, the field requester_address of the service query will hold the unique address of the requesting node. In that case, the service reply can be sent to the node with the given requester_address.

2. Alternatively, information indicative of a return path to the requesting node can be added to the service query while it is propagating along the path of nodes as described above. In that case, this path description can be used for sending the service reply back along the path that it came from.

3. As a further alternative, the technique described under "unique node relevance fields" below can be used.

Unique node relevance fields:

The service discovery mechanism described here can also be used to reach a given specific node in the network. For this purpose, a node that wants to be reached announces a unique service type, such as "node xyz", where "xyz" stands for a unique ID attributed to the node, which gives rise to a corresponding relevance field having a maximum at the location of the node. By announcing such a service type on the network, the node can be reached by means of a service query or any other message propagating in the same way as a service query.

This technique can e.g. be used by a node sending out a service query. When it sends out the query (or before sending out the query) it announces its unique service type on the network and stores the same in the requester_address of the service query. A service provider then can send a service reply for the requested service type by having it propagated in the same manner a service query for the unique service type of the requester. For this purpose, the protocol can define a class of message types (including service queries and, possibly, further message types) that are routed through the network using the propagation algorithm described for services queries above. In other words, any message of this class of messages propagates towards a maximum of a corresponding relevance field defined over the network. Such a service reply will pass along a path of nodes having increasing relevance values for the unique service type of the requester.

In order to save network resources and/or to allow a quick, directed propagation of the information about the unique service type of the requesting node, the protocol can be expanded to allow a service query to carry a service advertisement. Each node k receiving such an expanded service query not only forwards it to the neighbor having the strongest relevance value, but processes the service advertisement data included in the service query as above in order to evaluate the relevance value for the unique service type of the requester at the location of the node k.

Additionally, each node receiving such an expanded service query may send a service advertisement for the unique service type to its neighbors, possible with a low strength value in the field capacity_of_service, thereby announcing the unique service type locally around the path taken by the service query. This improves the chances that the returning service reply finds its way back even if one of the nodes passed by the original service query drops out of the network.

Flooding prevention:

Since, in the above system, service advertisements are announced repetitively to all neighbors of a service provider, which in turn forward them to all their neighboring nodes, the network may be flooded by an unnecessarily large number of service advertisements unless special measures are taken. Such measures are described in the following:

a) A node receiving a service advertisement can cache it for a given caching time before forwarding it. If it receives further copies of the same advertisement within the caching time, only the advertisement with the smallest number of hops is retained and broadcast as a single service advertisement after the caching time. This aggregation of service advertisements decreases the amount of service queries being exchanged.

b) A service advertisement is only forwarded by a node $m$ if its contribution $\varphi_j(m)$ to the relevance value (e.g. the value capacity_of_service/hop_count) at the forwarding node lies above a threshold value. If that is not the case, the service advertisement is not forwarded. This limits the number of nodes that can be affected by a single service provider.

c) Received service advertisements from different providers or for different services are cached for a given caching time and then sent out in one common packet.

Measures a), b) and c) can be used alone or in combination.

Additional comments:

The definition of the relevance field should be such that each of its local maxima corresponds a provider of the given service type. If the approach of equation (1) is used, the single-service relevance field $\varphi_j(n)$ should decrease sufficiently quickly with increasing distance from the service provider node j. Alternatively, the approach of equation (1) can be modified by suitable modification of the relevance determination procedure 16. When calculating the relevance value $\varphi(n)$ for a given node n, the procedure should make sure that the value is smaller than the largest relevance value of the neighboring nodes, decreasing $\varphi(n)$ if necessary.

In the embodiment described so far, network 1 was a wireless network. However, it can also be a wire-bound or partially wire-bound network, a peer-to-peer network implemented on a TCP/IP infrastructure, or any other type of network where the location and/or availability of the nodes changes frequently or where the infrastructure should be decentralized.

As mentioned above, the present invention can be used in a large variety of applications for detecting a wide range of services. Besides gateways, multimedia and printing services, service types may e.g. include personal services (such as a participant announcing through his a cellular phone that he wants to host a certain game), sensor services, parking services (a parking lot can e.g. announce through its attributed node that it is empty, while car drivers can, through their attributed nodes, look for parking services) etc. It can be used in commercial and personal networks, sensor networks, as well as for E-commerce, military operations and rescue missions.

While there are shown and described presently preferred embodiments of the invention, it is to be distinctly understood that the invention is not limited thereto but may be otherwise variously embodied and practiced within the scope of the following claims.

**Claims**

1. A method for determining a service provider on a dynamic network, wherein the network comprises a plurality of nodes, several of which offer a given first service type, said method comprising the steps of

 defining a relevance field for the given first service type by attributing, to each node n of at least part of said nodes, a relevance value $\varphi(n)$, wherein said relevance field has local maxima, each of said local maxima corresponding to a node offering the given first service type and

 sending a service query for the given first service type from a requesting node along a path of nodes having increasing relevance values until said service query reaches a node corresponding to a local maximum for determining a node offering said first service type.

2. The method of claim 1 wherein the relevance value $\varphi(n)$ at a node n is given by

$$\varphi(n) \ = \ \sum_{j=1}^{N} \varphi_j(n) \, ,$$

 wherein N is the number of nodes offering the given first service type and $\varphi_j(n)$ is a single-service relevance field, wherein each single-service relevance field $\varphi_j(n)$ has a maximum corresponding to a node j offering the given first service type.

3. The method of claim 2 wherein each single-service relevance field $\varphi_j(n)$ has the form

$$\varphi_j(n) \ = \ Q_j \ \cdot \ \varphi'_j(n) \, ,$$

 where $Q_j$ is a strength attributed to node j while $\varphi'_j(n)$ is the same for all nodes offering the given first service type.

4. The method of claim 3 wherein each single-service relevance field $\varphi_j(n)$ is a function that is monotonously decreasing with a distance dist(n, j) between said nodes n and j.

5. The method of claims 3 and 4 wherein

$$\varphi_j(n) \ = \ \frac{Q_j}{\mathrm{dist}(n, \ j)^k} \, ,$$

 where k is a constant > 0.

6. The method of claim 5 wherein k = 1.

7. The method of any of the claims 5 or 6 wherein for at least two different nodes j1 and j2 offering the given first service type, the attributed strengths $Q_{j1}$ and $Q_{j2}$ are different.

8. The method of claim 7 wherein said first service type is a gateway service offering a gateway to a second network, wherein said attributed strengths $Q_{j1}$ and $Q_{j2}$ are indicative of a data rate available through said gateways at nodes $j$1 and $j$2.

9. The method of any of the claims 4 to 8 wherein said distance dist(n, j) corresponds to the minimum number of nodes that a message has to pass for propagating from node n to node j.

10. The method of any of the preceding claims wherein the step of defining the relevance field comprises the steps of sending, from each node $j$ offering the given first service type, a service advertisement to neighboring nodes, and forwarding to neighboring nodes, by each node n, the service advertisements received from other nodes.

11. The method of claim 10 wherein each service advertisement comprises expiry data indicative of a time of expiry of the service advertisement, wherein data derived from said service advertisement is deleted from said nodes upon said time of expiry.

12. The method of any of the claims 10 or 11 wherein a node receiving a service advertisement caches said service advertisement temporarily during a period of time and compares the cached service advertisement to any further service advertisements arriving during the period of time, and forwards only a single advertisement of the given first service type and from a given service provider after expiry of said period of time.

13. The method of any of the claims 10 to 12 wherein a service advertisement received by a node m is only forwarded by the node m if a contribution of the service advertisement to the relevance value at node m exceeds a given threshold value.

14. The method of any of the preceding claims wherein each node m stores the relevance value $\varphi(m)$ attributed to the node m.

15. The method of claim 14 wherein, upon request of a service query for the given first service type, each node, if it does not provide the given first service type, determines the neighboring node k having the largest relevance value $\varphi(k)$ for the given first service type and forwards said service query to said node $k$.

16. The method of claim 15 wherein, if said node receiving the service query offers the given first service type, it returns a service reply to the node j.

17. The method of any of the preceding claims comprising the step of adding information indicative of a return path to a service query while said service query is propagating along said path of nodes having increasing relevance values.

18. The method of any of the preceding claims comprising the steps of
announcing, by a querying node emitting a service query, a unique second service type giving rise to a second relevance field having a maximum value at the querying node
including information indicative of said second service type in said service query, and
sending a reply to said service query along a path of nodes having increasing relevance values for said second relevance field.

19. The method of claim 18 wherein each node passed by said service query calculates a relevance value for said second relevance field from information included in said service query.

20. The method of any of the preceding claims wherein said dynamic network is a wireless network.

21. The method of any of the preceding claims comprising the step of defining a plurality of relevance fields for different service types.

22. A device for being incorporated into a dynamic network comprising
an interface (11) for forming a node n communicating with other nodes of said dynamic network,
a relevance determination means (16) for defining a relevance field for a given first service type by attributing, to said node n, a relevance value $\varphi(n)$, wherein said relevance field has local maxima, each of said local maxima corresponding to a node offering the given first service type

a query generating means (12) for sending a service query for the given first service type from the node n along a path of said other nodes, and

a query forwarding means (13) for forwarding an incoming service query to a neighboring node having a higher relevance value than said node n.

23. The device of claim 22 wherein said relevance determination means (16) is designed to calculate the relevance value at the node n from

$$\varphi(n) = \sum_{j=1}^{N} \varphi_j(n),$$

wherein N is the number of nodes offering the given first service type and $\varphi_j(n)$ is a single-service relevance field, wherein each single-service relevance field $\varphi_j(n)$ has a maximum corresponding to a node j offering the given first service type.

24. The device of one of the claims 22 or 23 further comprising advertisement forwarding means (14) for forwarding incoming service advertisements to said other nodes, said service advertisements being indicative of nodes offering the given first service type.

25. The device of one of the claims 22 to 24 wherein said query forwarding means (13) is adapted to forward the incoming service query to a neighboring node having a highest relevance value of all said neighboring nodes.

26. The device of any of the claims 22 to 25 further comprising means for carrying out at least one of the steps of the method according to any of the claims 1 to 21.

**Fig. 1**

| query generation | 12 |
|---|---|
| query forwarding | 13 |
| advertisment forwarding | 14 |
| message forwarding | 15 |
| relevance determination | 16 |

μP

service type
"gateway"
$\varphi = ...$

**Fig. 2**

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BROOKS R R ET AL: "Distributed adaptation methods for wireless sensor networks" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, vol. VOL. 7 OF 7, 1 December 2003 (2003-12-01), pages 2967-2971, XP010678203 ISBN: 0-7803-7974-8 | 1,22 | H04L12/56 |
| A | * abstract *<br><br>* figures 1,6 *<br>Chapter I. INTRODUCTION, page 2967<br>Chapter IV. COULOMBIC MODEL, page 2969<br>----- | 2-21, 23-26 | |
| A | TATESON J ET AL: "A NOVEL MECHANISM FOR ROUTING IN HIGHLY MOBILE AD HOC SENSOR NETWORKS"<br>LECTURE NOTES IN COMPUTER SCIENCE, SPRINGER VERLAG, NEW YORK, NY, US, vol. 2920, 19 January 2004 (2004-01-19), pages 204-217, XP008037064<br>ISSN: 0302-9743<br>* abstract *<br>* page 2, paragraph 2 - page 8 *<br>-----<br>-/-- | 1-26 | **TECHNICAL FIELDS SEARCHED (Int.Cl.7)**<br><br>H04L |

The present search report has been drawn up for all claims

| Place of search | Date of completion of the search | Examiner |
|---|---|---|
| Munich | 19 May 2005 | Matt, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 04 03 0863

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| T | LENDERS, MAY, PLATTNER: "Service Discovery in Mobile Ad Hoc Networks: A Field Theoretic Approach"[Online] 11 April 2005 (2005-04-11), pages 1-11, XP002328695 Retrieved from the Internet: URL:http://www.tik.ee.ethz.ch/~lenders/publication/lenders_wowmom05.pdf> [retrieved on 2005-05-19] Publication date is derived from message of the manet mailing list, see http://www1.ietf.org/mail-archive/web/manet/current/msg07084.html * the whole document * | 1-26 | |

TECHNICAL FIELDS
SEARCHED (Int.Cl.7)

The present search report has been drawn up for all claims

| Place of search | Date of completion of the search | Examiner |
|---|---|---|
| Munich | 19 May 2005 | Matt, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)